# EUROPÄISCHE PATENTSCHRIFT

(11) **EP 3 347 222 B1**
(45) Veröffentlichungstag und Bekanntmachung des Hinweises auf die Patenterteilung: **29.09.2021**
(21) Anmeldenummer: 16751604.6
(22) Anmeldetag: 16.08.2016
(51) Int. Cl.: B60J 7/057, B60J 7/02

(54) **FAHRZEUGDACH MIT EINEM BEWEGLICHEN DACHTEIL**
VEHICLE ROOF COMPRISING A MOBILE ROOF ELEMENT
TOIT DE VÉHICULE COMPORTANT UNE PARTIE DE TOIT MOBILE

(30) Priorität: 10.09.2015 DE 102015115233
(43) Veröffentlichungstag der Anmeldung: 18.07.2018
(73) Patentinhaber: Webasto SE, 82131 Stockdorf (DE)
(72) Erfinder: HÖLZEL, Dominik, 82140 Olching (DE); SKORIANZ, Gerhard, 82131 Stockdorf (DE); PLUCIENNIK, Björn, 82131 Stockdorf (DE)
(74) Vertreter: Schwan Schorer & Partner mbB
(86) Internationale Anmeldenummer: PCT/EP2016/069435
(87) Internationale Veröffentlichungsnummer: WO 2017/042002

(56) Entgegenhaltungen:
- EP-A1- 2 853 424
- EP-A2- 0 888 918
- DE-A1-102010 008 365
- DE-U- 7 306 032
- DE-U1- 20 111 621
- US-A1- 2012 110 912

## Beschreibung

Die vorliegende Erfindung betrifft ein Fahrzeugdach gemäß dem Oberbegriff von Anspruch 1.

Ein solches Fahrzeugdach ist in der DE 10 2010 055 456 A1 und in der US 2012/110912 A1 bekannt. Ein verlagerbarer Deckel zum Schließen einer Öffnung in einem Fahrzeugdach ist mittels eines Antriebsschlittens relativ zur Fahrzeugkarosserie verlagerbar geführt. Ein Antriebskabel ist vorgesehen, um den Antriebsschlitten und mit ihm den Deckel zu bewegen. Eine Kabelanbindung verbindet das Antriebskabel mit dem Antriebsschlitten und ist als Kunststoffumspritzung des Antriebskabels ausgeführt.

Nachteilig an einem solchen bekannten Fahrzeugdach ist die Tatsache, dass bei einem Unfall durch die dabei auftretenden hohen Kräfte die Kabelanbindung aus Kunststoff abreißen kann. Dadurch wird der Deckel von dem Antriebskabel getrennt. So entstehen gefährlich hohe Relativgeschwindigkeiten zwischen dem verlagerbaren Deckel und der Fahrzeugkarosserie.

Es ist daher Aufgabe der vorliegenden Erfindung, ein Fahrzeugdach mit einem beweglichen Dachteil zu schaffen, welches diese Nachteile überwindet.

Diese Aufgabe wird gelöst durch ein Fahrzeugdach gemäß Anspruch 1.

Erfindungsgemäß weist die Kabelanbindung ein Metallteil auf. Eine solche Kabelanbindung kann wesentlich höhere Kräfte aufnehmen als eine Kunststoffumspritzung und erhöht daher die Sicherheit bei einem Unfall.

Bevorzugte Ausführungsformen ergeben sich aus den Unteransprüchen.

Gemäß der Erfindung weist die Kabelanbindung eine Kunststoffumspritzung auf, mit welcher das Antriebskabel an einem Anbindungsabschnitt umspritzt ist. Das Metallelement ist als Blecheinleger ausgebildet, welcher mindestens teilweise in die Kunststoffumspritzung eingebettet ist. Dies bietet den Vorteil, dass der Kunststoff die Gleiteigenschaften der Kabelanbindung verbessert. Da der Blecheinleger die Festigkeit der Kabelanbindung gegenüber aus dem Stand der Technik bekannten Ausführungsformen wesentlich erhöht, kann für die Kunststoffumspritzung ein günstiger Werkstoff verwendet werden und / oder ein Werkstoff, der mehr hinsichtlich der Gleiteigenschaften optimiert ist.

Bei einer bevorzugten Ausführung der Erfindung ist das Metallelement mit dem Antriebskabel verschweißt. Eine solche Verschweißung erhöht die Stabilität der Kabelanbindung weiter. Die Gefahr, dass das Metallelement der Kabelanbindung vom Antriebskabel getrennt wird, wird so deutlich reduziert. Das Anschweißen kann mittels punktueller Schweißpunkte einer Laserschweißnaht erfolgen. Die beiden verschweißten Elemente (Metallelement und Antriebskabel) können anschließend in ein Schäumwerkzeug eingelegt werden, wenn die Kabelanbindung noch eine Kunststoffumspritzung erhalten soll. Eine solche Kunststoffumspritzung kann die Schweißnaht abdecken. Bei einer Ausführungsform, bei welcher das Antriebskabel eine Kabelwendel aufweist, die als Außengewinde um das Antriebskabel verläuft, kann das Metallelement mit der Kabelwendel verschweißt werden. Eine solche Kabelwendel ist üblicherweise dann vorgesehen, wenn mittels eines Ritzels eines Antriebs für das bewegliche Dachteil das Antriebskabel verschoben werden soll. Ein entsprechendes Antriebsritzel greift dann in die Kabelwendel ein und eine Rotation des Antriebsritzels bewegt das Antriebskabel in einem Führungskanal. Gemäß der vorliegenden Erfindung kann das Metallelement dabei an den radial außen liegenden Punkten des Außengewindes bzw. der Kabelwendel angeschweißt sein.

Gemäß der Erfindung greift das Metallelement in eine am Antriebskabel angeordnete Kabelwendel formschlüssig ein, indem beispielsweise das Metallelement eine Reihe von Zähnen aufweist, die hintereinander und entlang einer Längsrichtung des Antriebskabels angeordnet sind und die in die Kabelwendel des Antriebskabels formschlüssig eingreifen. Auch hier wird wieder die Anbindung des Metallelements an das Antriebskabel wesentlich verbessert.

Die bisher erläuterten bevorzugten Ausführungsformen der vorliegenden Erfindung betreffen eine verbesserte Anbindung des Metallelements an das Antriebskabel. Bei einem beweglichen Dachteil, welches insbesondere ein Deckel zu Verschließen einer Öffnung in einem Fahrzeugdach sein kann, ist jedoch der gesamte Bereich der Kabelanbindung zu betrachten, die das Antriebskabel mit dem Antriebsschlitten verbindet. Ein entsprechender Kraftfluss durch die Kabelanbindung verläuft vom Antriebskabel über das Metallelement zum Antriebsschlitten. Daher sind weitere ergänzende oder alternative Ausführungsformen der vorliegenden Erfindung dahin ausgerichtet, auch die Anbindung des Metallelements an den Antriebsschlitten zu verbessern.

Es ist bei einer bevorzugten Ausführung der vorliegenden Erfindung ist daher das Metallelement mit dem Antriebsschlitten verschweißt, vernietet, verzahnt, verhakt, verclipst oder verschraubt. Dadurch können wesentlich höhere Kräfte von der Verbindung zwischen Antriebskabel und Antriebsschlitten aufgenommen werden, ohne dass es zu einem Abreißen kommt. Bei einem Verschweißen oder einem Verzahnen können dieselben Elemente verwendet werden, die weiter oben bezüglich der Verbindung des Metallelements mit dem Antriebskabel beschrieben wurden. Unter einem Verhaken ist zu verstehen, dass entsprechende Vorsprünge des Metallelements in Öffnungen des Antriebsschlittens eingreifen, oder umgekehrt Vorsprünge des Antriebsschlittens in entsprechende Öffnungen des Metallelements, wobei eine Richtung des Eingriffs quer zu einer Längsausdehnung des Antriebskabels erfolgt, also quer zu einer Belastungsrichtung im Falle eines abrupten Abbremsens des Fahrzeugs.

Das Metallelement kann hierzu einen Fortsatz aufweisen, der im Wesentlichen quer zu einer Längsachse des Antriebskabels und zum Antriebsschlitten hin ausgerichtet ist, wobei das Metallelement im Bereich dieses Fortsatzes mit den beschriebenen Befestigungsmethoden mit dem Antriebsschlitten verbunden ist.

Weitere Ausgestaltungen der vorliegenden Erfindung betreffen formschlüssige Verbindungen der Kabelanbindung mit dem Antriebsschlitten. Zum einen kann das Metallelement der Kabelanbindung mit dem Antriebsschlitten eine formschlüssige Verbindung eingehen. Darunter ist zu verstehen, dass das Metallelement in einem Bereich, der nicht von einer Kunststoffumspritzung umspritzt ist, die formschlüssige Verbindung mit dem Antriebsschlitten eingeht. Alternativ kann auch ein umspritzter Abschnitt des Metallelements die formschlüssige Verbindung mit dem Antriebsschlitten eingehen oder weiter alternativ nur die Kunststoffumspritzung der Kabelanbindung.

Eine formschlüssige Verbindung des Metallelements mit dem Antriebsschlitten kann beispielsweise dadurch realisiert werden, dass die Kabelanbindung ein Stiftelement aufweist, welches das Metallelement mit dem Antriebsschlitten verbindet, wobei das Stiftelement vorzugsweise quer zu einer Längsachse des Antriebskabels ausgerichtet ist. Dies bietet den Vorteil, dass das Stiftelement durch die Kräfte eines Unfalls nicht gelöst werden kann. Ein Öffnung kann im Metallelement vorgesehen sein und mindestens eine Öffnung im Antriebsschlitten, wobei das Stiftelement durch beide Öffnungen geführt ist und so die formschlüssige Verbindung zwischen dem Metallelement und dem Antriebsschlitten herstellt. Die Öffnung kann am Metallelement dabei in einem Abschnitt vorgesehen sein, in welchem das Metallelement durch die Kunststoffumspritzung umspritzt ist.

Sowohl das Metallelement als auch der Antriebsschlitten können einen Fortsatz aufweisen, der im ersten Fall in eine zugeordnete Öffnung im Antriebsschlitten und im zweiten Fall in eine zugeordnete Öffnung im Metallelement eingreift. Auch hier ist wiederum der entsprechende Fortsatz quer zur Längsachse des Antriebskabels ausgerichtet. Die kraftschlüssige Verbindung kann dabei im Abschnitt des Metallelements vorgesehen sein, welches umspritzt ist oder der frei von der Kunststoffumspritzung ist.

Eine entsprechende kraftschlüssige Verbindung der Kabelanbindung mit dem Antriebsschlitten kann auch durch die Kunststoffumspritzung allein vorgesehen sein, also in Bereichen der Kabelanbindung, in denen die Kunststoffumspritzung im Inneren nicht durch das Metallelement in Form des Blecheinlegers unterstützt ist.

Bei allen Ausführungsformen der vorliegenden Erfindung kann weiterhin die Anbindung des Metallelements an das Antriebskabel weiter verstärkt werden, wenn das Metallelement einen Fortsatz aufweist, der an das Antriebskabel angeformt ist und dieses mindestens teilweise umgreift.

Im Folgenden wird die vorliegende Erfindung anhand der Figuren beispielhaft näher erläutert.

Dabei zeigt:
- Fig. 1 und 2: eine nicht beanspruchte Ausführungsform, bei welcher ein Metallelement mit einem Antriebskabel 16 verschweißt ist;
- Fig. 3 und 4: eine Ausführungsform der vorliegenden Erfindung, bei welcher ein Metallelement mit einem Antriebskabel verzahnt ist;
- Fig. 5: eine formschlüssige Verbindung eines Metallelements mit einem Antriebssch litten;
- Fig. 6: eine zu Fig. 5 alternative formschlüssige Verbindung;
- Fig. 7 und 8: eine Verbindung eines Metallelements mit einem Antriebsschlitten über einen Stift; und
- Fig. 9 und 10: eine Verbindung eines Metallelements mit einem Antriebsschlitten über einen Fortsatz des Metallelements.

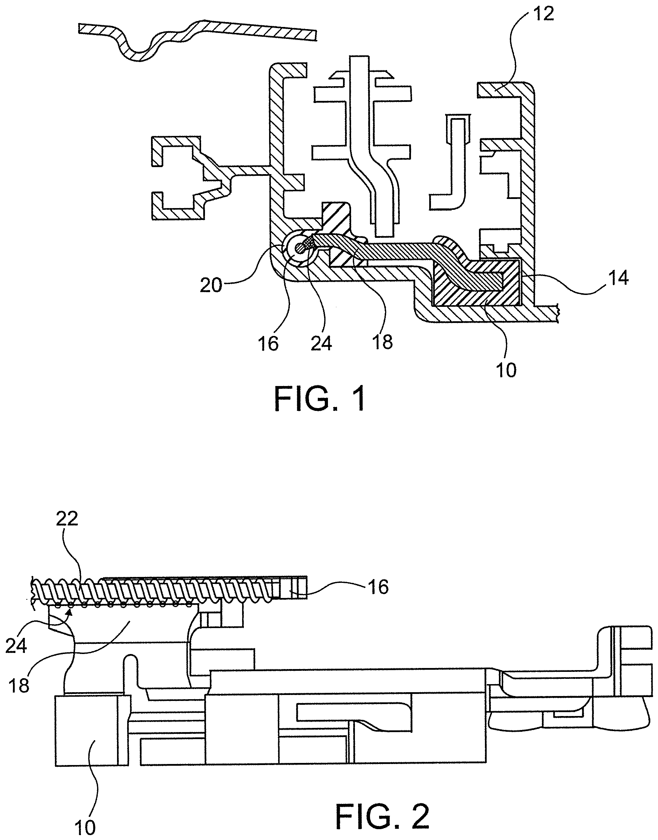

Figur 1 zeigt einen Antriebsschlitten 10 zum Führen und Verlagern eines nicht dargestellten beweglichen Dachteils, wie einem Deckel für ein öffenbares Fahrzeugdach, wobei der Antriebsschlitten 10 in einem Führungskanal 14 einer Führungsschiene 12 geführt ist. Die Führungsschiene 12 ist in Dachlängsrichtung eines Fahrzeugdachs dachfest angeordnet. Ein Antriebskabel 16 ist vorgesehen, welches ebenfalls in der Führungsschiene 12 verlagerbar geführt ist, und mittels dessen der Antriebsschlitten 10 bewegt werden kann. Eine Kabelanbindung zum kraftschlüssigen Verbinden des Antriebskabels 16 mit dem Antriebsschlitten 10 weist ein Metallteil 18 auf, sowie eine Kunststoffumspritzung 20, welche im Bereich dieser Kabelanbindung das Antriebskabel 16 und das Metallteil 18 umgibt. Es kann dabei vorgesehen sein, dass die Kunststoffumspritzung 20 auch den Antriebsschlitten 10 mindestens teilweise umgibt. Um die Anbindung des Metallelements 18, welches hier als Blecheinleger in der Kunststoffumspritzung 20 ausgebildet ist, an das Antriebskabel 16 zu erhöhen, sind mehrere Schweißpunkte 24 einer Laserschweißnaht vorgesehen, welche das Metallelement 18 mit dem Antriebskabel 16 verbindet. Während die Figur 1 den Bereich der Kabelanbindung in einer Querschnittsansicht zeigt, ist dieser Bereich in der Figur 2 in einer Aufsicht dargestellt. Wie hier zu erkennen ist, weist das Antriebskabel 16 eine Kabelwendel 22 auf und sind die Schweißpunkte 24 zur Verbindung des Antriebskabels 16 mit dem Metallelement 18 im Bereich der Kabelwendel 22 angeordnet. So werden die radial außen liegenden Erhöhungen der Kabelwendel 22 über die Schweißpunkte 24 mit dem Metallelement 18 verbunden.

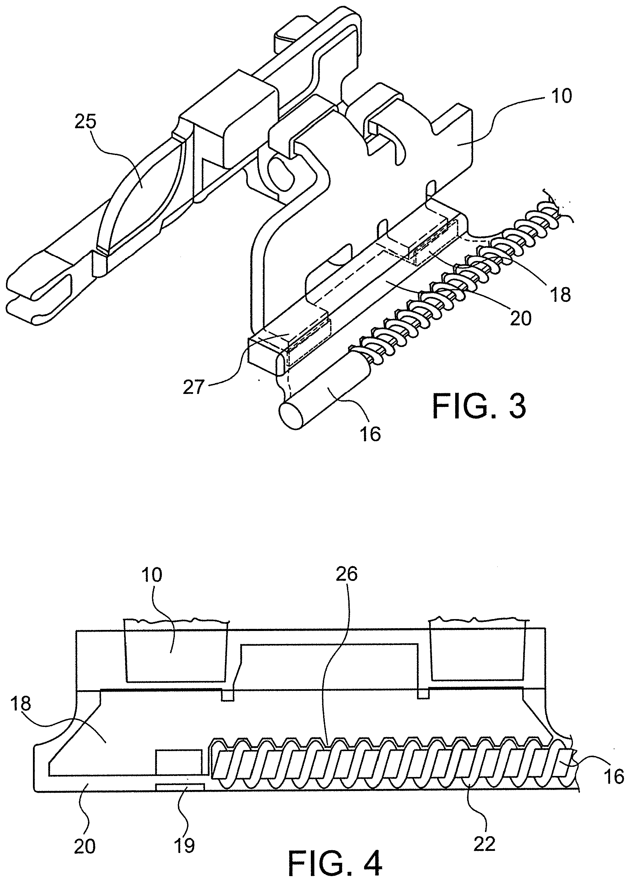

Die Figuren 3 und 4 zeigen eine Abwandlungsform der Ausführungsform der Figuren 1 und 2. Auch hier ist ein Antriebsschlitten 10 gezeigt, der mit einer Deckelmechanik 25 in Verbindung steht, welche einen nicht dargestellten verlagerbaren Deckel entlang des Fahrzeugdachs führt. Ein Antriebskabel 16 steht über eine Kabelanbindung mit dem Antriebsschlitten 10 in Verbindung, wobei die Kabelanbindung auch hier wieder ein Metallelement 18 in Form eines Blecheinlegers aufweist, der in eine Kunststoffumspritzung 20 eingebettet ist. Die Kunststoffumspritzung 20 umgibt auch benachbarte Bereiche des Antriebskabels 16. Wie bei der Ausführungsform der beiden vorhergehenden Figuren ist an der Außenseite des Antriebskabels 16 eine Kabelwendel 22 angeordnet. Zwei Steckverbindungen 27 verbinden den Antriebsschlitten 10 mit der Kabelanbindung, indem Fortsätze des Antriebsschlittens 10 in entsprechende Öffnungen der Kunststoffumspritzung 20 hineinragen. Diese Aufnahmen in der Kabelanbindung können durch die Kunststoffumspritzung 20 allein oder ergänzend zur Erhöhung der Festigkeit auch durch das Metallelement 18 gebildet werden.

Während bei der nicht beanspruchten Ausführungsform der Figuren 1 und 2 die Anbindung des Metallelements 18 an das Führungskabel 14 und die Kabelwendel 22 dort über eine Schweißverbindung realisiert ist, ist bei der erfindungsgemäßen Ausführungsform der Figuren 3 und 4 eine Verzahnung von Metallelement 18 mit der Kabelwendel 22 des Antriebskabels 16 vorgesehen. Hierzu sind am Metallelement 18 Zähne 26 vorgesehen, die so ausgebildet sind (bezüglich Zahnhöhe und -abstand), dass die Zähne 26 in die Kabelwendel 22 eingreifen. Durch den Eingriff der Zähne 26 in die Kabelwendel 22 wird insbesondere für eine Belastungsrichtung entlang des Antriebskabels 16 die Festigkeit der Kabelanbindung wesentlich verbessert gegenüber bekannten Ausführungsformen, bei welchen kein Metallelement 18 vorgesehen ist.

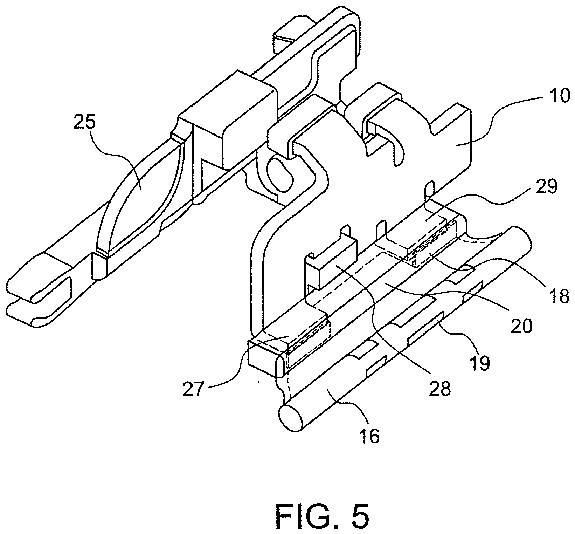

Anhand der Figur 5 werden im Folgenden weiter bevorzugte Ausgestaltungen der vorliegenden Erfindung näher erläutert. Wie bei den vorhergehenden Beispielen ist ein Antriebsschlitten 10 über eine Kabelanbindung mit einem Antriebskabel 16 verbunden. Die Kabelanbindung weist dabei ein Metallelement 18 zur Verstärkung auf sowie eine Kunststoffumspritzung 20, welche das Metallelement 18 und benachbarte Bereiche des Antriebskabels 16 umgibt. Gegenüber der Ausführungsform der Figur 3 ist zusätzlich zu zwei Steckverbindungen 27 und 29, bei denen Fortsätze des Antriebsschlittens 10 in Öffnungen der Kabelanbindung bzw. deren Kunststoffumspritzung 20 eingreifen, eine dritte Anbindung im Bereich eines Fortsatzes 28 des Antriebsschlittens 10 vorgesehen. Auch dieser Fortsatz 28 greift in eine Öffnung der Kabelanbindung ein. Damit werden auftretende Kräfte nicht nur auf zwei sondern auf drei Anbindungen zwischen Antriebsschlitten und Kabelanbindung verteilt, was die Belastbarkeit des Systems erhöht. Bei der Ausführungsform der Figur 5 ist weiterhin die dritte Anbindung über den Fortsatz 28 gegenüber den beiden Steckverbindungen 27 und 29 erhöht angeordnet. Somit liegen die beiden Steckverbindungen 27 und 29 in einer Ebene, die im Wesentlichen parallel zur Dachhaut angeordnet ist, und die dritte Anbindung mittels des Fortsatzes 28 ist gegenüber dieser Ebene erhöht angeordnet. Damit können auch auf die Kabelanbindung wirkende Drehmomente können besser abgeleitet werden.

Das Metallelement 18 der Ausführungsform der Figur 5 weist weiterhin Fortsätze 19 auf, welche das Antriebskabel 16 mindestens teilweise umgreifen. Die Fortsätze 19 des Metallelements 18 sind dabei so ausgebildet, dass jeweils paarweise das Antriebskabel 16 von zwei Seiten klammerartig umgreifen. Diese Ausgestaltung des Metallelements 18 kann bei allen Varianten der vorliegenden Erfindung verwendet werden, um die Anbindung des Metallelements 18 an das Antriebskabel 16 weiter zu verstärken.

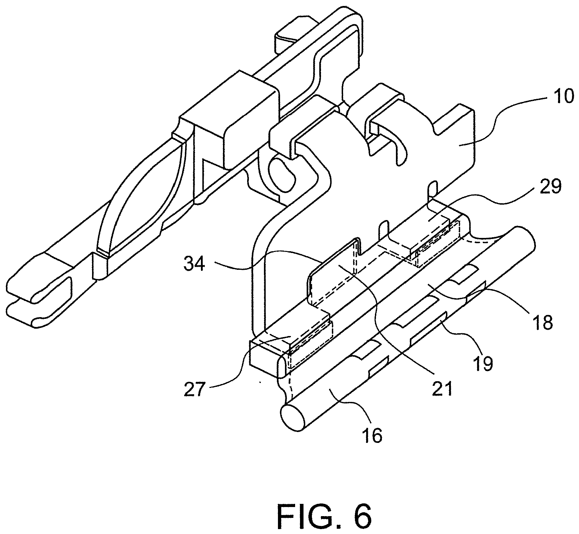

In der Figur 6 ist eine Ausführungsform der vorliegenden Erfindung gezeigt, bei welcher ein Metallelement 18 einen Vorsprung 21 aufweist, welcher in eine entsprechende Aussparung 34 eines Antriebsschlittens 10 eingreift, um ein geometrisches Hinterhaken des Metallelements 18 im Antriebsschlitten 10 zu erreichen. Der Vorsprung 21 ist dabei im verbauten Zustand im Fahrzeugdach nach oben ausgerichtet und stellt so einen rechteckigen, plattenförmigen Abschnitt des Metallelements 18 dar, mit einer Längsachse, die im Wesentlichen entlang der Fahrzeuglängsachse ausgerichtet ist. Die Aussparung 34 ist ein geometrisch entsprechender Ausschnitt aus einem ebenfalls senkrecht und in Fahrzeuglängsrichtung ausgerichteten plattenförmigen Abschnitt des Antriebsschlittens 10. Selbstverständlich kann alternativ auch der Antriebsschlitten 10 den Vorsprung aufweisen und das Metallelement 18 eine entsprechende Aussparung. Die entsprechenden Elemente der Kabelanbindung (Vorsprung oder Aussparung) können auch durch die Kunststoffumspritzung 20 allein ausgebildet werden. Dies würde bedeuten, dass das Metallelement 18 schon vor diesem Anbindungsbereich zwischen Kabelanbindung und Antriebsschlitten 10 endet. Allerdings bietet die dargestellte Variante einen Vorteil bezüglich der Festigkeit der Anbindung.

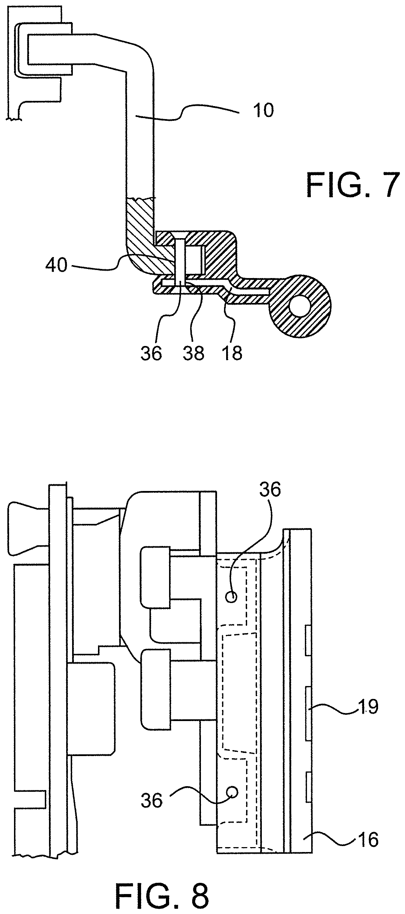

Die Figuren 7 und 8 zeigen eine weitere Ausführungsform der vorliegenden Erfindung im Querschnitt (Figur 7) und in einer Aufsicht (Figur 8). Hier ist ein Metallelement 18 eine Kabelanbindung mit einem Antriebsschlitten 10 über einen Stift 36 formschlüssig verbunden. Der Stift 36 ist dabei durch entsprechende Öffnungen38 und 40 im Metallelement 18 und im Antriebsschlitten 10 eingesteckt und in einer Richtung senkrecht zum Fahrzeugdach und senkrecht zur Fahrtrichtung fixiert. Wie in der Aufsicht der Figur 8 dargestellt, können mehrere solche Stifte 36 vorgesehen sein, um die Anbindung des Metallelements 18 an den Antriebsschlitten 10 zu verstärken. Ergänzend kann eine Kunststoffumspritzung vorgesehen sein, die nur das dargestellte Antriebskabel 16 umgibt oder auch den Bereich, in welchem Stifte 36 angeordnet sind.

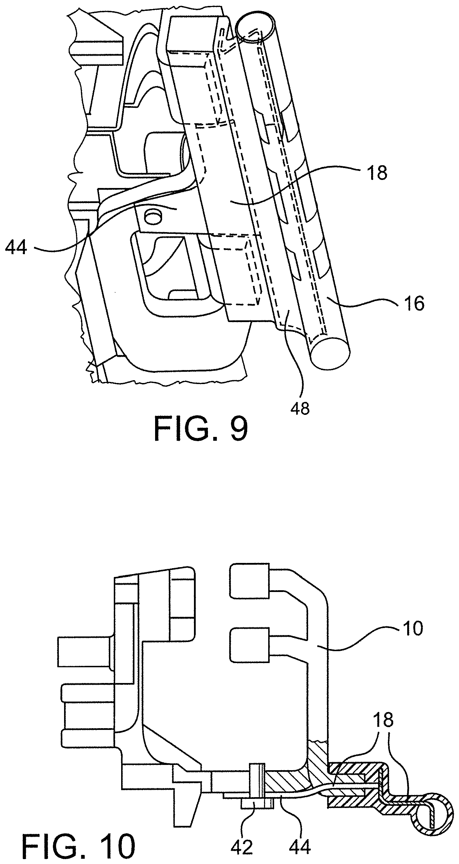

Eine ähnliche Variante ist in den Figuren 9 und 10 abgebildet, wobei die Figur 9 eine Ansicht von unten auf eine Kabelanbindung zeigt und die Figur 10 einen Querschnitt durch die Kabelanbindung. Bei dieser Ausführungsform der vorliegenden Erfindung weist ein Metallelement 18 der Kabelanbindung eine Verlängerung 44 auf, die in einem Bereich unter einem Antriebsschlitten 10 geführt ist. Die Verlängerung 44 ist dabei plattenartig ausgeführt und in eine Richtung von einem außen liegenden Antriebskabel 16 weg nach innen zum Antriebsschlitten 10 hin ausgerichtet. Wie in der Querschnittsansicht der Figur 10 gezeigt, ist die Verlängerung 44 des Metallelements 18 über eine Verschraubung 42 mit dem Antriebsschlitten 10 verschraubt. Auch hiermit ist wiederum durch eine zusätzliche formschlüssige Verbindung in Form der Verschraubung 42 die Anbindung des Metallelements 18 an den Antriebsschlitten 10 deutlich verstärkt. Die Verlängerung 44 kann mit dem Antriebsschlitten auch verschweißt oder vernietet sein.

Bei allen erfindungsgemäßen Ausführungsformen greift das Metallelement 18 auch in das Antriebskabel 16 selbst formschlüssig ein um die Anbindung so zu verbessern. Das Antriebskabel 16 weist hierzu eine Kabelwendel auf und kann hierzu zusätzlich auch eine Öffnung wie einen Schlitz aufweisen, welcher ein zugeordnetes Ende des Metallelements 18 aufnimmt. In der Fig. 10 ist dies an dem der Verlängerung 44 abgewandten Ende des Metallteils 18 angedeutet (das Antriebskabel selbst ist hier nicht dargestellt).

### Bezugszeichenliste

- 10: Antriebsschlitten
- 12: Führungsschiene
- 14: Führungskanal
- 16: Antriebskabel
- 18: Metallelement
- 19: Fortsatz von 18
- 20: Kunststoffumspritzung
- 21: Vorsprung von 18
- 22: Kabelwendel
- 24: Schweißpunkt
- 25: Deckelmechanik
- 26: Zähne
- 27: Steckverbindung
- 28: Fortsatz von 10
- 29: Steckverbindung
- 30: Flanke
- 32: Flanke
- 34: Aussparung
- 36: Stift
- 38: Öffnung in 18
- 40: Öffnung in 10
- 42: Verschraubung
- 44: Verlängerung von 18

## Patentansprüche

1. Fahrzeugdach mit einem beweglichen Dachteil, welches mittels eines Antriebsschlittens (10), der mit dem Dachteil verbunden und in einer Führungsschiene (12) verlagerbar geführt ist, bewegbar ist, einem Antriebskabel (16) zum Bewegen des Antriebsschlittens (10), und einer Kabelanbindung, die das Antriebskabel (16) mit dem Antriebsschlitten (10) verbindet, wobei die Kabelanbindung ein Metallelement (18) aufweist,
wobei die Kabelanbindung eine Kunststoffumspritzung (20) aufweist, mit welcher das Antriebskabel (16) an einem Anbindungsabschnitt umspritzt ist,
das Metallelement (18) als Blecheinleger ausgebildet ist, welcher mindestens teilweise in die Kunststoffumspritzung (20) eingebettet ist,
**dadurch gekennzeichnet, dass**
das Metallelement (18) in eine am Antriebskabel (16) angeordnete Kabelwendel (22) formschlüssig eingreift

2. Fahrzeugdach nach Anspruch 1,
**dadurch gekennzeichnet, dass**
das Metallelement (18) eine Reihe von Zähnen (26) aufweist, die hintereinander und entlang einer Längsrichtung des Antriebskabels (16) angeordnet sind und in die Kabelwendel (24) des Antriebskabels (16) formschlüssig eingreifen, wobei die Kabelwendel (24) als Außengewinde um das Antriebskabel (16) verläuft.

3. Fahrzeugdach nach einem der vorhergehenden Ansprüche, **dadurch gekennzeichnet, dass** das Metallelement (18) mit dem Antriebskabel (16) verschweißt ist.

4. Fahrzeugdach nach Anspruch 3, **dadurch gekennzeichnet, dass** an dem Antriebskabel (16) eine Kabelwendel (22) angeordnet ist, die als Außengewinde um das Antriebskabel (16) verläuft, und das Metallelement (18) mit der Kabelwendel (22) verschweißt ist.

5. Fahrzeugdach nach einem der vorhergehenden Ansprüche, **dadurch gekennzeichnet, dass** das Metallelement (18) mit dem Antriebsschlitten (10) verschweißt, vernietet, verzahnt, verhakt, verclipst oder verschraubt ist.

6. Fahrzeugdach nach Anspruch 5, **dadurch gekennzeichnet, dass** das Metallelement einen Fortsatz (19) oder eine Verlängerung (44) aufweist, der im Wesentlichen quer zu einer Längsachse des Antriebskabel (16) und zum Antriebsschlitten (10) hin ausgerichtet ist, und das Metallelement (18) im Bereich dieses Fortsatzes mit dem Antriebsschlitten (10) verschweißt, vernietet, verzahnt, verhakt, verclipst oder verschraubt ist.

7. Fahrzeugdach nach einem der vorhergehenden Ansprüche, **dadurch gekennzeichnet, dass** das Metallelement (18) formschlüssig mit dem Antriebsschlitten (10) verbunden ist.

8. Fahrzeugdach nach Anspruch 7, **dadurch gekennzeichnet, dass** die Kabelanbindung einen Stift (36) aufweist, mittels welchem das Metallelement (18) mit dem Antriebsschlitten (10) formschlüssig verbunden ist.

9. Fahrzeugdach nach Anspruch 8, **dadurch gekennzeichnet, dass** der Stift (36) quer zu einer Längsachse des Antriebskabel (16) ausgerichtet ist, und in mindestens einer Öffnung (38) im Metallelement (18) gelagert ist und durch eine Öffnung (40) im Antriebsschlitten (10) hindurchtritt.

10. Fahrzeugdach nach Anspruch 7, **dadurch gekennzeichnet, dass** das Metallelement (18) oder der Antriebsschlitten (10) einen Vorsprung (21) aufweist, der im Wesentlichen quer zu einer Längsachse des Antriebskabel (16) ausgerichtet ist und der in eine zugeordnete Aussparung (34) im Antriebsschlitten (10) beziehungsweise im Metallelement eingreift.

11. Fahrzeugdach nach Anspruch 1, **dadurch gekennzeichnet, dass** die Kunststoffumspritzung (20) formschlüssig mit dem Antriebsschlitten (10) verbunden ist.

12. Fahrzeugdach nach Anspruch 11, **dadurch gekennzeichnet, dass** die Kunststoffumspritzung (20) oder der Antriebsschlitten (10) einen Fortsatz aufweist, der im Wesentlichen quer zu einer Längsachse des Antriebskabel (16) ausgerichtet ist und der in eine zugeordnete Öffnung im Antriebsschlitten (10) beziehungsweise in der Kunststoffumspritzung (20) eingreift.

13. Fahrzeugdach nach einem der vorhergehenden Ansprüche, **dadurch gekennzeichnet, dass** das Metallelement (18) einen Fortsatz (19) aufweist, welcher das Antriebskabel (16) mindestens teilweise umgreift.

## Claims

1. Vehicle roof comprising a mobile roof part, which is movable by means of a drive carriage (10) which is connected to the roof part and is guided in a shiftable manner in a guide rail (12), a drive cable (16) for moving the drive carriage (10), and a cable connection which connects the drive cable (16) to the drive carriage (10), wherein the cable connection has a metal element (18), wherein the cable connection has a plastics encapsulation (20) with which the drive cable (16) is encapsulated on a connecting portion by injection moulding, the metal element (18) is configured as a sheet-metal insert which is at least partially embedded in the plastics encapsulation (20), **characterized in that** the metal element (18) engages in a form-fitting manner in a cable coil (22) arranged on the drive cable (16).

2. Vehicle roof according to Claim 1, **characterized in that** the metal element (18) has a series of teeth (26) which are arranged one behind another and along a longitudinal direction of the drive cable (16) and engage in a form-fitting manner in the cable coil (24) of the drive cable (16), wherein the cable coil (24) runs as an external thread around the drive cable (16).

3. Vehicle roof according to either of the preceding claims, **characterized in that** the metal element (18) is welded to the drive cable (16).

4. Vehicle roof according to Claim 3, **characterized in that** a cable coil (22) which runs as an external thread around the drive cable (16) is arranged on the drive cable (16), and the metal element (18) is welded to the cable coil (22).

5. Vehicle roof according to one of the preceding claims, **characterized in that** the metal element (18) is welded, riveted, interlinked, interlocked, clipped or screwed to the drive carriage (10).

6. Vehicle roof according to Claim 5, **characterized in that** the metal element has a continuation (19) or an extension (44) which is oriented substantially transversely with respect to a longitudinal axis of the drive cable (16) and towards the drive carriage (10), and the metal element (18) is welded, riveted, interlinked, interlocked, clipped or screwed to the drive carriage (10) in the region of this continuation.

7. Vehicle roof according to one of the preceding claims, **characterized in that** the metal element (18) is connected to the drive carriage (10) in a form-fitting manner.

8. Vehicle roof according to Claim 7, **characterized in that** the cable connection has a pin (36) by means of which the metal element (18) is connected to the drive carriage (10) in a form-fitting manner.

9. Vehicle roof according to Claim 8, **characterized in that** the pin (36) is oriented transversely with respect to a longitudinal axis of the drive cable (16) and is mounted in at least one opening (38) in the metal element (18) and passes through an opening (40) in the drive carriage (10).

10. Vehicle roof according to Claim 7, **characterized in that** the metal element (18) or the drive carriage (10) has a projection (21) which is oriented substantially transversely with respect to a longitudinal axis of the drive cable (16) and which engages in an associated recess (34) in the drive carriage (10) or in the metal element.

11. Vehicle roof according to Claim 1, **characterized in that** the plastics encapsulation (20) is connected to the drive carriage (10) in a form-fitting manner.

12. Vehicle roof according to Claim 11, **characterized in that** the plastics encapsulation (20) or the drive carriage (10) has a continuation which is oriented substantially transversely with respect to a longitudinal axis of the drive cable (16) and which engages in an associated opening in the drive carriage (10) or in the plastics encapsulation (20).

13. Vehicle roof according to one of the preceding claims, **characterized in that** the metal element (18) has a continuation (19) which at least partially engages around the drive cable (16).

## Revendications

1. Toit de véhicule comportant une partie de toit mobile, qui peut être déplacée au moyen d'un coulisseau d'entraînement (10), qui est relié à la partie de toit et qui est guidé de manière déplaçable dans un rail de guidage (12), un câble d'entraînement (16) pour déplacer le coulisseau d'entraînement (10), et un raccordement de câble, qui relie le câble d'entraînement (16) au coulisseau d'entraînement (10), le raccordement de câble comprenant un élément métallique (18),
le raccordement de câble comprenant un surmoulage en matière plastique (20), avec lequel le câble d'entraînement (16) est surmoulé au niveau d'une section de raccordement,
l'élément métallique (18) étant configuré en tant qu'insert de tôle, qui est au moins partiellement incorporé dans le surmoulage en matière plastique (20),
**caractérisé en ce que**
l'élément métallique (18) s'engage par accouplement de forme dans une hélice de câble (22) agencée sur le câble d'entraînement (16).

2. Toit de véhicule selon la revendication 1,
**caractérisé en ce que**
l'élément métallique (18) comprend une série de dents (26), qui sont agencées les unes après les autres et le long d'une direction longitudinale du câble d'entraînement (16) et s'engagent par accouplement de forme dans l'hélice de câble (24) du câble d'entraînement (16), l'hélice de câble (24) s'étendant en tant que filetage extérieur autour du câble d'entraînement (16).

3. Toit de véhicule selon l'une quelconque des revendications précédentes, **caractérisé en ce que** l'élément métallique (18) est soudé avec le câble d'entraînement (16).

4. Toit de véhicule selon la revendication 3, **caractérisé en ce qu'**une hélice de câble (22) est agencée sur le câble d'entraînement (16), qui s'étend en tant que filetage extérieur autour du câble d'entraînement (16), et l'élément métallique (18) est soudé avec l'hélice de câble (22).

5. Toit de véhicule selon l'une quelconque des revendications précédentes, **caractérisé en ce que** l'élément métallique (18) est soudé, riveté, imbriqué, accroché, clipsé ou vissé avec le coulisseau d'entraînement (10).

6. Toit de véhicule selon la revendication 5, **caractérisé en ce que** l'élément métallique comprend un prolongement (19) ou un allongement (44), qui est orienté essentiellement perpendiculairement à un axe longitudinal du câble d'entraînement (16) et vers le coulisseau d'entraînement (10), et l'élément métallique (18) est soudé, riveté, imbriqué, accroché, clipsé ou vissé avec le coulisseau d'entraînement (10) dans la zone de ce prolongement.

7. Toit de véhicule selon l'une quelconque des revendications précédentes, **caractérisé en ce que** l'élément métallique (18) est relié par accouplement de forme avec le coulisseau d'entraînement (10).

8. Toit de véhicule selon la revendication 7, **caractérisé en ce que** le raccordement de câble comprend une goupille (36), au moyen de laquelle l'élément métallique (18) est relié par accouplement de forme avec le coulisseau d'entraînement (10).

9. Toit de véhicule selon la revendication 8, **caractérisé en ce que** la goupille (36) est orientée perpendiculairement à un axe longitudinal du câble d'entraînement (16), et est montée dans au moins une ouverture (38) dans l'élément métallique (18), et passe à travers une ouverture (40) dans le coulisseau d'entraînement (10).

10. Toit de véhicule selon la revendication 7, **caractérisé en ce que** l'élément métallique (18) ou le coulisseau d'entraînement (10) comprend une protubérance (21), qui est orientée essentiellement perpendiculairement à un axe longitudinal du câble d'entraînement (16) et qui s'engage dans un évidement associé (34) dans le coulisseau d'entraînement (10) ou dans l'élément métallique.

11. Toit de véhicule selon la revendication 1, **caractérisé en ce que** le surmoulage en matière plastique (20) est relié par accouplement de forme avec le coulisseau d'entraînement (10).

12. Toit de véhicule selon la revendication 11, **caractérisé en ce que** le surmoulage en matière plastique (20) ou le coulisseau d'entraînement (10) comprend un prolongement, qui est orienté essentiellement perpendiculairement à un axe longitudinal du câble d'entraînement (16) et qui s'engage dans une ouverture associée dans le coulisseau d'entraînement (10) ou dans le surmoulage en matière plastique (20).

13. Toit de véhicule selon l'une quelconque des revendications précédentes, **caractérisé en ce que** l'élément métallique (18) comprend un prolongement (19), qui s'engage au moins partiellement autour du câble d'entraînement (16).
